# EUROPEAN PATENT SPECIFICATION

(11) **EP 0 982 905 B1**
(45) Date of publication and mention of the grant of the patent: **10.08.2005**
(21) Application number: 98116271.2
(22) Date of filing: 28.08.1998
(51) Int. Cl.: H04L 27/20

(54) **Universal PSK modulation apparatus and method**
Vorrichtung und Verfahren zur universellen PSK-Modulation
Dispositif et procédé de modulation PSK universelle

(43) Date of publication of application: 01.03.2000
(73) Proprietor: Sony International (Europe) GmbH, 10785 Berlin (DE)
(72) Inventor: Konschak, Tino, Sony International (Europe) GmbH, 70736 Fellbach (DE); Dölle, Thomas, Sony International (Europe) GmbH, 70736 Fellbach (DE); Brankovic, Veselin, Sony International(Europe)GmbH, 70736 Fellbach (DE); Krupezevic, Dragan, Sony International(Europe)GmbH, 70736 Fellbach (DE)
(74) Representative: Körber, Martin, Dipl.-Phys.

(56) References cited:
- EP-A- 0 583 059
- WO-A-97/19540
- FR-A- 2 422 286
- US-A- 4 617 535
- US-A- 4 812 786
- MIODRAG TEMERINAC: "POSSIBILITIES OF THE DIGITAL REALISED PHASE MODULATOR" PROCEEDINGS OF THE MEDITERRANEAN ELECTROTECHNICAL CONFERENCE (MELECON), ATHENS, MAY 24 - 26, 1983, vol. 1, 24 May 1983, page 1/2 XP000011901

## Description

The present invention relates to a universal phase shift keying modulation apparatus and a universal phase shift keying modulation method.

Phase shift keying modulation is widely spread and used in many different applications, e. g. satellite communication, digital mobile telecommunication and so on. The basic idea is to transmit a digital information signal by means of the phase of two or more modulation symbols. The modulation symbols thereby act as carrier signals. The phase of the modulation symbols is shifted in discrete steps depending on the data symbol of the input information signal. Each data symbol of the input information signal is thereby mapped to a complex number (the modulation symbol), the phase of which represents the transmitted information.

Phase modulated signals can be easily depicted as a vector in the phase domain. Thereby, the so-called I/Q-diagram is obtained, in which the I-component is the signal component in phase to the carrier signal and the Q-component is the quadrature component perpenticular to the carrier phase.

In the receiving apparatus, the information signal is determined by comparison of the phase of the received modulation symbol to the constellation points of the modulation scheme. The constellation points are here the complex numbers of the modulation symbols in the I/Q-diagram, which are allocated to digital numbers. Depending on the order of the PSK modulation, the I/Q-diagram has L=2^{M} constellation points, whereby M is the number of bits to be transmitted with one modulation symbol. In other words, each constellation point is allocated to a digital number consisting of M bits so that each modulation symbol is allocated to one constellation point. In the receiving apparatus, the random phase shift introduced by transmission through the radio channel must be corrected by an equalizer system. Differential phase shift keying (DPSK) modulation can also be used, whereby not the actual phase of the transmitted modulation symbol contains the user information, but the phase difference between two successive modulation symbols. In a DSPK modulation apparatus, the PSK modulation symbols are differently encoded by using a feedback loop, which delays the modulation symbols in units of one modulation symbol and multiplies the delayed preceding modulation symbol with the succeeding modulation symbol to obtain a differentially encoded signal.

Known PSK modulation schemes are e. g. the binary phase shift keying (BPSK) modulation, in which a modulation of first order (M=1) is performed and information signals are mapped to two modulation symbols. Further known are the quadrature phase shift keying (QPSK) modulation, the 8 PSK modulation and so on, in which second, third and so on order modulation is performed FR-A-2 422 286 discloses a modulation apparatus according to the preamble of claim 1 and a modulation method according to the preamble of claim 8. None of the known PSK modulation apparatusses and PSK modulation methods however provides for the possibility of a phase shift keying modulation by a unique modulation apparatus and a unique modulation, respectively, which allow PSK modulation of various orders in a unique structure.

The object of the present invention is therefore to provide a modulation apparatus and a modulation method for performing a phase shift keying (PSK) modulation of M-th order, in which a selectable and flexible modulation of variable order can be performed.

This object is achieved by a modulation apparatus for performing an adaptive phase shift keying (PSK) modulation of M-th order according to claim 1.

The above object is further achieved by a modulation method for performing an adaptive phase shift keying (PSK) modulation of M-th order according to claim 8.

One of the main advantages of the present invention is that all PSK modulation schemes are supported with one modulation apparatus and one modulation method. In practical application, the modulation scheme, i. e. the modulation order can e. g. be changed during operation. The modulation signals represent the phase of the modulation symbols in integer multiples of the phase increment.

According to the invention, the modulation apparatus comprises a control means for controlling the order M of the PSK modulation to be performed, M being an integer 1≤M≤Mₘₐₓ, whereby Mₘₐₓ is the highest possible modulation order and the phase increment depends on Mₘₐₓ. The highest possible modulation order Mₘₐₓ means that the modulation apparatus and the modulation method according to the present invention must be limited to a predetermined highest possible modulation order Mₘₐₓ, which usually depends on physical characteristics of the transmission path and so on. The phase increment is unique for each modulation order used and is determined by the highest possible modulation order Mₘₐₓ. Advantageously, the phase increment ΔΦ equals 2π/Lₘₐₓ, whereby Lₘₐₓ=2^{Mmax}. The phase of each modulation symbol is an integer multiple of this unique phase increment.

The mapping means comprises advantageously several XOR-gates, by which the input information signals are mapped onto the modulation symbols. Thereby, the mapping means can comprise a number of input terminals, being connected to the XOR-gates and a number of output terminals. Thereby, in the mapping step performed in the mapping means a number of input data, e. g. a serially input information symbol is processed into a number of output signals.

Further advantageously, a selection means is connected to the output terminals of the mapping means and is controlled by the control means for selecting output signals of the output terminals of said mapping means for setting the not selected output signals to zero. Hereby, if the selected modulation order is smaller than the highest possible modulation order, the not used output terminals are set to zero. Further advantageously, an adding means is provided for adding a phase offset of (Lₘₐₓ/2L) to said selected output signals. This phase offest serves to adapt the phase rotation to the used modulation order to ensure a good phase distribution in case of differential encoding.

The modulation apparatus and the modulation method according to the present invention are particularly useful in the case of a differential phase shift keying (DPSK) modulation, since the use of the phase signal as the modulation signal instead of a complex base band signal as in the prior art simplifies the differential encoder. The multiplication of the preceding modulation symbol with the succeeding modulation symbol can as a result of the present invention be replaced by an addition, which is easier to implement in hardware and operates faster. Thus, the modulation apparatus according to the present invention further advantageously comprises an encoding means for differentially encoding the modulation signals by means of an adding means.

In the following, the present invention is explained in detail relating to the enclosed drawings, in which
figure 1 shows examples of I/Q-diagrams for three different PSK modulation orders, in which the modulation symbols are represented as integer multiples of a phase increment according to the present invention,
figure 2 shows a bloc diagram of one embodiment of a modulation apparatus according to the present invention,
figure 3 shows a detailed arrangement of a modulation apparatus according to the present invention, and
figure 4 shows a differential encoding means for a DPSK modulation apparatus according to the present invention.

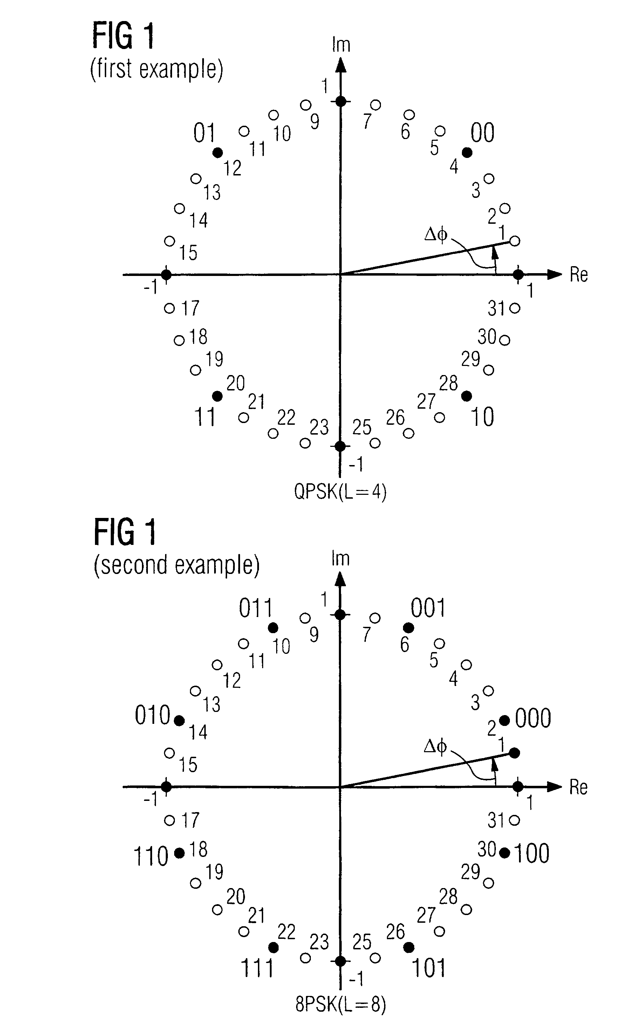

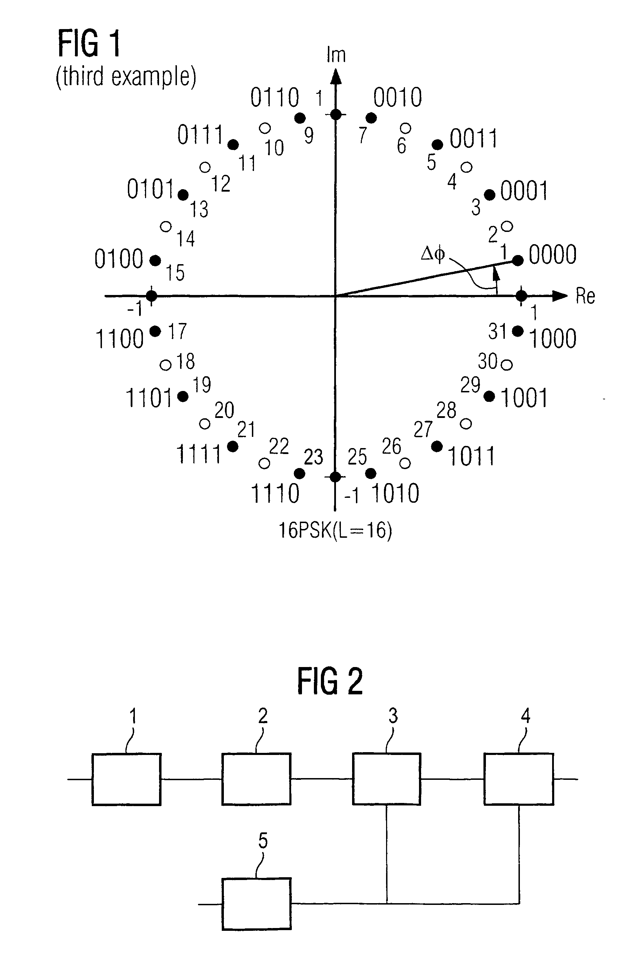

In figure 1, three different I/Q-diagrams are shown. The first I/Q-diagram represents a QPSK modulation scheme, in which M=2 and L=4, so that four modulation symbols each containing two bits of information are presented. The entire modulation constellation is rotated by π/4 to ensure a good phase distribution in case of a differential modulation, which results in better spectral properties of the modulated signal. However, it is not necessary to rotate the constellation. The result of the shown rotation is that the first modulation symbol "00" is located at an angle of π/4 from the real part axis (I-axis) in the positive direction. The second modulation symbol "01", the third modulation symbol "11" and the fourth modulation symbol "10" are rotated correspondingly by π/4. The general goal of the rotation is that none of the modulation symbols is located on the I- or Q-axis.

In all three examples shown in figure 1, the highest possible modulation order is Mₘₐₓ=5. The highest possible modulation order Mₘₐₓ, however, can be chosen to have another value. The maximum order value usually depends on physical properties of the used modulation apparatus, the transmission path or the like.

As can be seen in the I/Q-diagram of the QPSK modulation scheme in figure 1, each modulation symbol is represented as an integer multiple of an unique phase increment ΔΦ. In case of the shown QPSK modulation scheme, the integer multiple is 4. In other words, the phase value of the first modulation symbol "00" is 4×ΔΦ. ΔΦ is the unique phase increment, which is determined by the highest possible modulation order Mₘₐₓ, which in the present example has a value of 5. ΔΦ is defined as ΔΦ=2π/Lₘₐₓ, whereby Lₘₐₓ=2^{Mmax}. This means, that in the example shown in figure 1, ΔΦ=π/16. The phase of the first modulation symbol "00" of the QPSK modulation scheme is therefore represented as 4×ΔΦ=π/4. Correspondingly, the second modulation symbol "01" is represented or defined as 12×ΔΦ=3π/4, the third modulation symbol "11" is represented or defined as 20×ΔΦ=5π/4 and the fourth modulation symbol "10" is represented or defined as 28×ΔΦ=7π/4.

In all three examples shown in figure 1, digital input information signals are mapped to the different modulation symbols or constellation points so that two adjacent modulation symbols differ only in one bit, which is called Gray encoding.

The second I/Q-diagram shown in figure 1 shows an example for a 8 PSK modulation scheme, in which L=8 and M=3, so that three bits are transmitted with one modulation symbol. The I/Q-diagram contains 8 modulation symbols. The entire constellation of the shown example is rotated by π/8 to ensure a good phase distribution in case of a differential modulation, which results in better spectral properties of the modulated signal. It is, however, not necessary to rotate the constellation. The first modulation symbol "000" is located at an angle of π/8 from the real part axis (I-axis) of the shown 8 PSK diagram. The remaining 7 modulation symbols are consecutively arranged at angles of π/4 from each other. As can be seen from the diagram, each of the 8 modulation symbols is represented or defined as an integer multiple of the unique phase increment ΔΦ. As in the first example, the unique phase increment ΔΦ is defined as ΔΦ=π/16 for a highest possible order M=5. Thus, the phase of the first modulation symbol "000" is represented as 2×ΔΦ=π/8. The phase of the second modulation symbol "001" is represented as 6×ΔΦ. The phase of the third modulation symbol "011" is represented as 10×ΔΦ. The phase of the fourth modulation symbol "010" is represented as 14×ΔΦ. The phase of the fifth modulation symbol "110" is represented as 18×ΔΦ. The phase of the sixth modulation symbol "111" is represented as 22×ΔΦ. The phase of the seventh modulation symbol "101" is represented as 26×ΔΦ. The phase of the eighth modulation symbol "100" is represented as 30×ΔΦ. Adjacent modulation symbols differ only in one bit, so that a so-called Gray encoding is achieved.

The third example shown in figure 1 shows a 16 PSK modulation scheme, in which L=16 and M=4, so that the modulation scheme contains 16 modulation symbols each comprising four bits. Here, the highest possible modulation order Mₘₐₓ=5, so that the unique phase increment ΔΦ is defined as ΔΦ=π/16. The modulation constellation of the third example is rotated by π/32 to ensure a good phase distribution in case of a differential modulation, which results in better spectral properties of the modulated symbol. It is, however, not necessary to rotate the constellation. All 16 modulation symbols are represented as integer multiples of the unique phase increment ΔΦ. The phase of the first modulation symbol "0000" is represented or defined as 1×ΔΦ=π/16. The phase of the second modulation symbol "0001" is represented as 3×ΔΦ. The remaining modulation symbols are correspondingly represented by integer multiples of 5, 7, 9, ... of ΔΦ.

In figure 2, a bloc diagram of an embodiment of a modulation apparatus according to the present invention is shown. The shown part can e. g. be a part of a transmitting apparatus of a telecommunication system. Incoming data, which can be serially arranged, are converted into parallel data in a serial-to-parallel-converting means 1. The parallel arranged data are input to a mapping means 2, in which the input information data are mapped to modulation symbols to generate modulation signals. The number and the bit length of the modulation symbols depends on the chosen modulation order. If, e. g., a QPSK modulation is chosen, the order is defined as M=2, so that four modulation symbols each containing two bits are used to modulate the input information signals. In the example shown in figure 2, the mapping means 2 is controlled by a control means 5, by which the order M of the modulation is controlled. The control means 5 can thereby receive information from a connected transmitting apparatus or the like. Alternatively, the control means 5 can be user operated to determine and choose the selected modulation order M. The modulation means 2 performs a modulation of the input information signals by mapping the input parallel information to the PSK modulation symbols, whereby the modulation symbols are represented as integer multiples of the phase increment ΔΦ, as explained relating to figure 1. The result is, that modulation signals are output as integer multiples of the phase increment ΔΦ. In other words, the output modulation signals represent or contain the phase information of the corresponding modulation symbol. As explained relating to figure 1, the phase increment ΔΦ is determined by the highest possible modulation order Mₘₐₓ, which can be performed in the modulation apparatus of the present invention.

The mapping means 2, maps the input parallel information signals to the highest possible number Lₘₐₓ=2M^{max}, of modulation symbols. In case that a modulation order M<Mₘₐₓ is used, only L of the parallel log₂(Lₘₐₓ) input lines carry information and the not used lines are set to zero. The modulation signals output by the mapping means 2 are input to a selection means 3, which is controlled by a control means 5 to select the modulation symbols corresponding to the chosen modulation order M. The selection means 3 thus ensures that the not used data lines are set to zero by multiplying them with zero. The selection means 3 can thus be omitted if it is assured that these not used lines are always zero. In an adding means 4, a phase offset of (Lₘₐₓ/2L) is added to the selected modulation signals output from the selection means 3. The adding means 4 is also controlled by the control means 5 to receive information on the chosen modulation order M. The adding means 4 can be omitted if no phase rotation is required.

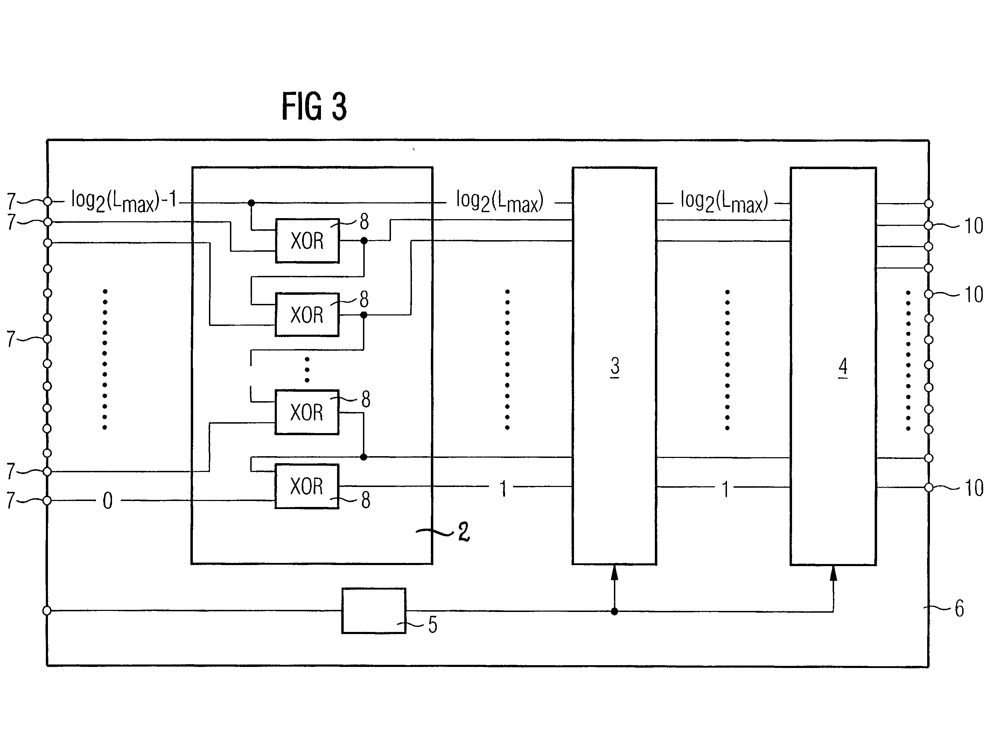

In figure 3, a modulation apparatus corresponding to the example shown in figure 2 is shown in more detail. The modulation apparatus 6 shown in figure 3 comprises a number of input terminals 7, which receive parallel information signals to be modulated. The number of input terminals is log₂(Lₘₐₓ). The parallel information signals input to the terminals 7 are supplied to the mapping means, in which the input information signals are mapped to the modulation symbols corresponding to the highest order PSK modulation scheme by means of XOR-gates 8. One input of each XOR-gate is connected directly to one of the input terminals 7. The other input of each of the XOR-gates is connected to the output of one adjacent XOR-gate. The mapping means 2 performs a conversion from Gray decimal encoding for mapping of the input information signals to the modulation symbols corresponding to the highest possible modulation order Mₘₐₓ, whereby the modulation symbols are represented or defined by the unique phase increment ΔΦ. The modulation signals output by the mapping means 2 thus are the phase information of the modulation symbols. The mapping means 2 has a number of log₂(Lₘₐₓ) output lines which are supplied to a selection means 3. The selection means 3 is controlled by the control means 5 for selecting output signals of the mapping means 2 corresponding to the chosen order of the PSK modulation. The not selected output modulation signals are set to zero by the selection means 3. The control means receives information on the chosen modulation order, e. g. a value M as the chosen modulation order, and supplies a control signal by means of log₂(Lₘₐₓ) bus lines to the selection means 3 for selecting corresponding output modulation signals from the mapping means 3. The selected modulation signals from the selection means as well as the not selected signals, which are set to zero, are supplied from the selection means 3 to an adding means 4. The adding means 4 is also controlled by the control means 5 and adds a phase offset of (Lₘₐₓ/2L) to the selected modulation signals to adapt the phase rotation to the selected order of the PSK modulation. The modulation apparatus 6 shown in figure 3 further comprises log₂(Lₘₐₓ) output terminals 10, by which modulation signals are output, which are represented by multiples of the phase increment ΔΦ. The adding means 4 does not add a phase offset, if the chosen modulation order is Mₘₐₓ. Further, the selection means 3 can be omitted in case that it is assured that the not used information lines (for M<Mₘₐₓ) are always zero.

The output modulation signal from the terminals 10 is converted by means of a conversion means, into a complex signal, which contains the phase information to be transmitted, using a look up table. The look up table is stored in a storage means. The addresses of the complex values stored in the look up table are integer values corresponding to the integer multiples of the phase increment ΔΦ.

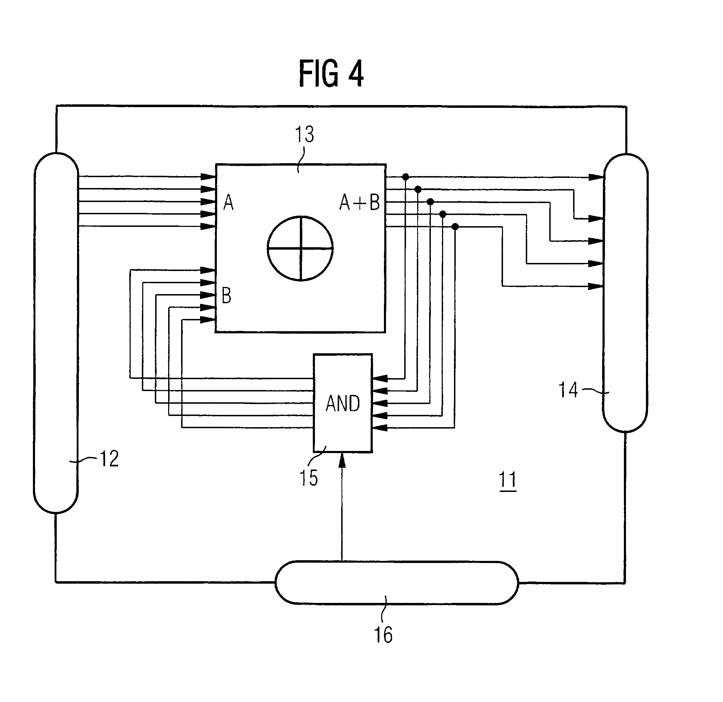

For a differential PSK modulation, the PSK modulation apparatus of the present invention must be extended by the differential encoding means 11, as e. g. shown in figure 4. Since the modulation signals at the output terminals 10 of the PSK modulation apparatus 6 represent the phase of the modulation symbols, the differential encoding in the differential encoding means 11 can be performed by a simple addition instead of a multiplication in case of the complex notation as in the prior art. Correspondingly, the differential encoding means 11 shown in figure 4 comprises an adding means 13, in which an adding operation is performed to differentially encode the input modulation signals in units of one modulation symbol. The input terminal 12 of the differential encoding means 11 is connected to the output terminals 10 of the modulation apparatus 6 shown in figure 3, so that the modulation signals output by the modulation apparatus 6 are input to the adding means 13 at the position A. The preceding modulation signal is delayed by one modulation symbol and input by a feedback loop at the position B of the adding means 13, which performs an adding operation A+B. The result of this adding operation is output to an output terminal 14 of the differential encoding means 11. The implementation of an adding operation is simple in the arrangement and faster in processing than a multiplication as in the prior art, so that the modulation scheme according to the present invention is particularly advantageous for differential PSK modulation. In the feedback loop of the differential encoding means 11, an AND-gate 15 is provided by which a pilot carrier or reference carrier can be signalled to one of the modulation symbols, e. g. the first modulation symbol. The reference carrier must not be differentially encoded and can e. g. contain phase control information which is used by a receiving demodulating apparatus. The position of the reference carrier is input at a reference carrier terminal 16 of the encoding means 11. The encoding means 11 comprises log₂(Lₘₐₓ) data lines between the input terminal 12, the adding means 13, the output terminal 14 and the AND-gate 15, respectively.

The PSK modulated modulation signal output at the terminal 10 of the modulation apparatus 6, or in case of differential encoding, the differentially encoded modulation signal output at the terminal 14 of the differential encoding means 11, is converted into a complex signal to be transmitted by means of a look-up table. The look-up table can e. g. be stored in a storage means (not shown) and stores the sine and cosine representation of integer multiples of ΔΦ at addresses which are defined by corresponding integer values. The output modulation signal, which is representing a phase information, serves as address to read complex signals from the predetermined look-up table. The complex signal is then transmitted.

The advantages of the present invention are not limited to a pure PSK modulation, but can also be applied of any modulation scheme combining a PSK modulation with any other known modulation. For example, the present invention can be advantageously applied to a amplitude phase shift keying (APSK) modulation, in which the phase and the amplitude of the transmitted signals contain information. In this case the structure of modulation apparatus has to be adapted correspondingly.

## Claims

1. Modulation apparatus for performing a phase shift keying modulation of M-th order, comprising
a mapping means (2) for mapping input information signals to L=2^{M} modulation symbols to generate modulation signals, and for producing the modulation symbols by taking integer multiples of a phase increment Δφ, so that the modulation signals are output as integer multiples of the phase increment,
**characterized in,**
**that** the apparatus further comprises a control means (5) for controlling the order M of the phase shift keying modulation to be performed, M being an integer 1≤M≤Mₘₐₓ, where Mₘₐₓ is the highest possible modulation order and the phase increment is determined by Mₘₐₓwhereby the control means controls the selection of modulation symbols corresponding to the modulation order M.

2. Modulation apparatus according to claim 1,
**characterized in,**
**that** the phase increment ΔΦ equals 2π/Lₘₐₓ, where Lₘₐₓ= 2^{Mmax}.

3. Modulation apparatus according to claim 1 or 2,
**characterized in,**
**that** the mapping means (2) comprises XOR-gates (8).

4. Modulation apparatus according to claim 3,
**characterized in,**
**that** the mapping means (2) comprises a number of log₂(Lₘₐₓ) input terminals being connected to the XOR-gates, and a number of log₂(Lₘₐₓ) output terminals.

5. Modulation apparatus according to claim 4,
**characterized by**
a selection means (3) connected to said output terminals (14) of said mapping means and controlled by said control means (5) for selecting output signals of output terminals of said mapping means (2) and for setting the not selected output signals to zero.

6. Modulation apparatus according to claim 5,
**characterized by**
an adding means (4) for adding a phase offset of Lₘₐₓ/2L to said selected output signals.

7. Modulation apparatus according to one of the preceding claims,
**characterized by**
further comprising an encoding means (11) for differentially encoding said output phase of the modulation signals by means of an adding means (13).

8. Modulation method for performing a phase shift keying modulation of M-th order, comprising the step of
mapping input information signals to L=2^{M} modulation symbols to generate modulation signals, whereby the modulation symbols are produced by taking integer multiples of a phase increment Δφ, so that the modulation signals are output as integer multiples of the phase increment,
**characterized**
**by** the further steps of controlling the order M of the phase shift keying modulation to be performed, M being an integer 1≤M≤M_{max,} where Mₘₐₓ is the highest possible modulation order and the phase increment is determined by Mₘₐₓ, and of selecting the modulation symbols corresponding to the modulation order M.

9. Modulation method according to claim 8,
**characterized in,**
**that** the phase increment ΔΦ equals 2π/Lₘₐₓ , where Lₘₐₓ=2^{Mmax}.

10. Modulation method according to claim 8 or 9,
**characterized in,**
**that** the mapping step comprises XOR-operations.

11. Modulation method according to claim 10,
**characterized in,**
**that** in said mapping step a number of log₂(Lₘₐₓ) input signals is processed into a number of log₂(Lₘₐₓ) output signals.

12. Modulation method according to claim 11,
**characterized by**
a selection step being controlled by means of a control signal for selecting output signals of said mapping step and for setting the not selected output signals to zero.

13. Modulation method according to claim 12,
**characterized by**
an adding step for adding a phase offset of Lₘₐₓ/2L to said selected output signals.

14. Modulation method according to one of the claims 8 to 13,
**characterized by**
further comprising an encoding step for differentially encoding said output phase of the modulation signals by means of an adding operation.

## Patentansprüche

1. Modulationsvorrichtung zur Ausführung einer Phasenumtastungsmodulation M-ter Ordnung, umfassend eine Abbildungseinrichtung (2) zur Abbildung von Eingangsinformationssignalen in L=2^{M} Modulationssymbolen für die Erzeugung von Modulationssignalen und für die Lieferung der Modulationssymbole durch Heranziehen von ganzzahligen Vielfachen eines Phaseninkrements Δφ, derart, dass die Modulationssignale als ganzzahlige Vielfache des Phaseninkrements abgegeben werden,
**dadurch gekennzeichnet, dass** sie ferner eine Steuereinrichtung (5) zur Steuerung der Ordnung M der auszuführenden Phasenumtastungsmodulation aufweist, wobei M eine ganze Zahl von 1≤M≤Mₘₐₓ ist, wobei Mₘₐₓ die höchstmögliche Modulationsordnung ist, wobei das Phaseninkrement durch Mₘₐₓ bestimmt ist und wobei die Steuereinrichtung die Auswahl von Modulationssymbolen entsprechend der Modulationsordnung M steuert.

2. Modulationsvorrichtung nach Anspruch 1,
**dadurch gekennzeichnet, dass** das Phaseninkrement Δφ gleich 2π/Lₘₐₓ ist, wobei Lₘₐₓ = 2^{Mmax} ist.

3. Modulationsvorrichtung nach Anspruch 1 oder 2,
**dadurch gekennzeichnet, dass** die Abbildungseinrichtung (2) Exklusiv-ODER-Glieder (8) enthält.

4. Modulationsvorrichtung nach Anspruch 3,
**dadurch gekennzeichnet, dass** die Abbildungseinrichtung (2) eine Anzahl von log₂(Lₘₐₓ) Eingangsanschlüssen, die mit den Exklusiv-ODER-Gliedern verbunden sind, und eine Anzahl von log₂(Lₘₐₓ) Ausgangsanschlüssen aufweist.

5. Modulationsvorrichtung nach Anspruch 4,
**dadurch gekennzeichnet, dass** eine Auswahleinrichtung (3) mit den genannten Ausgangsanschlüssen (14) der Abbildungseinrichtung verbunden und durch die genannte Steuereinrichtung (5) zur Auswahl von Ausgangssignalen der Ausgangsanschlüsse der Abbildungseinrichtung (2) sowie zum Setzen der nicht ausgewählten Ausgangssignale auf Null gesteuert ist.

6. Modulationsvorrichtung nach Anspruch 5,
**dadurch gekennzeichnet, dass** eine Addiereinrichtung (4) zum Addieren eines Phasenversatzes von Lₘₐₓ/2L zu den ausgewählten Ausgangssignalen vorgesehen ist.

7. Modulationsvorrichtung nach einem der vorhergehenden Ansprüche, **dadurch gekennzeichnet, dass** ferner eine Codierungseinrichtung (11) zur differentiellen Codierung bzw. Differenz-Codierung der genannten Abgabephase der Modulationssignale mittels einer Addiereinrichtung (13) vorgesehen ist.

8. Modulationsverfahren zur Ausführung einer Phasenumtastungsmodulation M-ter Ordnung, umfassend den Schritt der Abbildung von Eingangsinformationssignalen in L=2^{M} Modulationssymbolen für die Erzeugung von Modulationssignalen, wobei die Modulationssymbole durch Heranziehen von ganzzahligen Vielfachen eines Phaseninkrements Δφ geliefert werden, derart, dass die Modulationssignale als ganzzahlige Vielfache des Phaseninkrements abgegeben werden,
**gekennzeichnet durch** die weiteren Schritte des Steuerns der Ordnung M der auszuführenden Phasenumtastungsmodulation, wobei M eine ganze Zahl von 1≤M≤Mₘₐₓ ist, wobei Mₘₐₓ die höchstmögliche Modulationsordnung ist und wobei das Phaseninkrement **durch** Mₘₐₓ bestimmt wird,
und der Auswahl der der Modulationsordnung M entsprechenden Modulationssymbole.

9. Modulationsverfahren nach Anspruch 8,
**dadurch gekennzeichnet, dass** das Phaseninkrement Δφ gleich 2π/Lₘₐₓ ist, wobei Lₘₐₓ=2^{Mmax} ist.

10. Modulationsverfahren nach Anspruch 8 oder 9,
**dadurch gekennzeichnet, dass** der Abbildungsschritt Exklusiv-ODER-Operationen umfasst.

11. Modulationsverfahren nach Anspruch 10,
**dadurch gekennzeichnet, dass** bei dem genannten Abbildungsschritt eine Anzahl von log₂(Lₘₐₓ) Eingangssignalen zu einer Anzahl von log₂(Lₘₐₓ) Ausgangs- bzw. Abgabesignalen verarbeitet wird.

12. Modulationsverfahren nach Anspruch 11,
**dadurch gekennzeichnet, dass** ein Auswahlschritt mittels eines Steuersignals zur Auswahl von Abgabesignalen des genannten Abbildungsschrittes und zum Setzen der nicht ausgewählten Ausgangssignale auf Null gesteuert wird.

13. Modulationsverfahren nach Anspruch 12,
**gekennzeichnet durch** einen Addierschritt zum Hinzufügen eines Phasenversatzes von Lₘₐₓ/2L zu den ausgewählten Abgabesignalen.

14. Modulationsverfahren nach einem der Ansprüche 8 bis 13,
**dadurch gekennzeichnet, dass** ferner ein Codierungsschritt zur differentiellen Codierung bzw. Differenz-Codierung der genannten Abgabephase der Modulationssignale mittels einer Hinzufügungs- bzw. Addieroperation vorgesehen ist.

## Revendications

1. Appareil de modulation pour réaliser une modulation par déplacement de phase du M^{ième} ordre, comprenant :
un moyen de cartographie (2) pour cartographier des signaux d'informations d'entrée en L = 2^{M} symboles de modulation pour générer des signaux de modulation, et pour produire des symboles de modulation en prenant des multiples entiers d'un incrément de phase ΔΦ, de sorte que les signaux de modulation sont fournis comme des entiers multiples de l'incrément de phase,
**caractérisé en ce que**,
l'appareil comprend en outre un moyen de commande (5) pour commander l'ordre M de la modulation par déplacement de phase à réaliser, M étant un entier 1 ≤M ≤ Mₘₐₓ, où Mₘₐₓ est l'ordre de modulation le plus élevé possible et l'incrément de phase est déterminé par Mₘₐₓ, de sorte que le moyen de commande commande la sélection des symboles de modulation correspondants à l'ordre de modulation M.

2. Appareil de modulation selon la revendication 1,
**caractérisé en ce que**,
l'incrément de phase ΔΦ égal 2π/Lₘₐₓ où Lₘₐₓ = 2^{Mmax}.

3. Appareil de modulation selon la revendication 1 ou 2,
**caractérisé en ce que**,
le moyen de cartographie (2) comprend des portes OU exclusif (8).

4. Appareil de modulation selon la revendication 3,
**caractérisé en ce que**,
le moyen de cartographie (2) comprend un nombre de log₂(Lₘₐₓ) bornes d'entrée raccordées aux portes OU exclusif, et un nombre de log₂(Lₘₐₓ) bornes de sortie.

5. Appareil de modulation selon la revendication 4,
**caractérisé par**
un moyen de sélection (3) raccordé auxdites bornes de sortie (14) dudit moyen de cartographie et commandé par ledit moyen de commande (5) pour sélectionner des signaux de sortie des bornes de sortie dudit moyen de cartographie (2) et pour mettre à zéro les signaux de sortie non sélectionnés.

6. Appareil de modulation selon la revendication 5,
**caractérisé par**
un moyen d'addition (4) pour additionner un déphasage de Lₘₐₓ/2L auxdits signaux de sortie sélectionnés.

7. Appareil de modulation selon l'une quelconque des revendications précédentes,
**caractérisé en ce qu'**il comprend en outre
un moyen de codage (11) pour coder différentiellement ladite phase de sortie des signaux de modulation au moyen d'un moyen d'addition (13).

8. Procédé de modulation pour réaliser une modulation par déplacement de phase du M^{ième} ordre, comprenant les étapes de :
cartographie des signaux d'informations d'entrée en L = 2^{M} symboles de modulation pour générer des signaux de modulation, de sorte que les symboles de modulation sont produits en prenant des multiples entiers d'un incrément de phase ΔΦ, pour que les signaux de modulation soient fournis comme des multiples entiers de l'incrément de phase,
**caractérisé par**
les autres étapes de commande de l'ordre M de la modulation par déplacement de phase à réaliser, M étant un entier 1 ≤ M ≤Mₘₐₓ, ou Mₘₐₓ est l'ordre de modulation le plus élevé possible et l'incrément de phase est déterminé par Mₘₐₓ, et de sélection des symboles de modulation correspondants à l'ordre de modulation M.

9. Procédé de modulation selon la revendication 8,
**caractérisé en ce que**,
l'incrément de phase ΔΦ est égal à 2π/Lₘₐₓ, où Lₘₐₓ = 2^{Mmax}.

10. Procédé de modulation selon la revendication 8 ou 9,
**caractérisé en ce que**,
l'étape de cartographie comprend des opérations OU exclusif.

11. Procédé de modulation selon la revendication 10,
**caractérisé en ce que**,
ladite étape de cartographie d'un nombre de signaux d'entrée log₂(Lₘₐₓ) est traitée en un nombre de signaux de sortie log₂(Lₘₐₓ).

12. Procédé de modulation selon la revendication 11,
**caractérisé par**
l'étape de sélection commandée au moyen d'un signal de commande pour sélectionner des signaux de sortie de ladite étape de cartographie et pour mettre à zéro les signaux de sortie non sélectionnés.

13. Procédé de modulation selon la revendication 12,
**caractérisé par**
une étape d'addition pour additionner un décalage de phase de Lₘₐₓ/2L pour lesdits signaux de sortie sélectionnés.

14. Procédé de modulation selon l'une quelconque des revendications 8 à 13,
**caractérisé en ce qu'**il comprend en outre une étape de codage pour coder différentiellement ladite phase de sortie des signaux de modulation au moyen d'une opération d'addition.
